Europäisches Patentamt

European Patent Office

Office européen des brevets

(11) Numéro de publication: **0 074 299**
**A1**

(12) **DEMANDE DE BREVET EUROPEEN**

(21) Numéro de dépôt: **82401549.9**

(22) Date de dépôt: **18.08.82**

(51) Int. Cl.³: **G 01 P 7/00**
**B 60 T 8/00**

(30) Priorité: **09.09.81 FR 8117056**

(43) Date de publication de la demande:
**16.03.83 Bulletin 83/11**

(84) Etats contractants désignés:
**AT BE CH DE GB IT LI LU NL SE**

(71) Demandeur: **FAIVELEY ENTREPRISES**
**93, rue du Docteur-Bauer**
**F-93404 Saint-Ouen Cedex(FR)**

(72) Inventeur: **Moulin, Bernard**
**42, avenue Gabriel d'Estrées**
**F-37270 Montlouis sur Loire(FR)**

(72) Inventeur: **Tondu, André**
**26, avenue Victor Laloux**
**F-37270 Montlouis sur Loire(FR)**

(74) Mandataire: **Bouju, André**
**38 Avenue de la Grande Armée**
**F-75017 Paris(FR)**

(54) Procédé pour mesurer la vitesse d'un véhicule sur voie ferrée et dispositif pour sa mise en oeuvre.

㊼ Procédé et dispositif de mesure de la vitesse d'un véhicule sur voie ferrée à partir de la vitesse de rotation de ses essieux.

Des détecteurs de vitesse 1 sont reliés à un étage 2 donnant la vitesse maximale Vmax transmise sur une borne de sortie 6, un additionneur 9, reçoit Vmax et l'intégrale $\gamma$ mt de la décélération moyenne obtenue par un dérivateur (17) et intégrée par un intégrateur 21. La décélération maximale $\gamma$ max est obtenue par un dérivateur 26. Sa dérivée obtenue par un dérivateur 28 est comparée à un seuil d'enrayage S dans un comparateur 29. L'intégrateur 21, normalement rendu inopérant par le court-circuit 23, fonctionne en cas d'enrayage pour donner sur la borne 6 Vmax + $\gamma$ mt.

Application à la mesure de la vitesse d'un véhicule sur voie ferrée.

EP 0 074 299 A1

FIG_1

Vmax

"Procédé pour mesurer la vitesse d'un véhicule sur voie ferrée et dispositif pour sa mise en oeuvre".

La présente invention concerne un procédé pour mesurer la vitesse d'un véhicule sur voie ferrée.

L'invention concerne également un dispositif pour la mise en oeuvre de ce procédé.

Cette mesure est pratiquement indispensable pour divers usages, par exemple pour l'affichage au poste de conduite et la régulation de vitesse, ainsi que pour la détection d'un patinage au démarrage ou d'un enrayage au freinage. Or précisément, cette dernière application donne lieu à certaines difficultés.

La mesure s'effectue en effet au moyen de détecteurs classiques à impulsions de la vitesse angulaire des essieux, un transducteur effectuant la conversion en vitesse linéaire du véhicule. Pour tenir compte d'une amorce d'enrayage de certains essieux en cas de freinage, on a proposé de mesurer la vitesse de chaque essieu et d'en calculer la moyenne. Mais il est évident que, dans les circonstances évoquées, cette moyenne perd toute signification.

On a également proposé de retenir comme vitesse du véhicule celle correspondant à la vitesse de l'essieu le plus rapide. Mais là encore cette mesure est sans signification si tous les essieux sont affectés d'une amorce d'enrayage.

La présente invention vise à réaliser un procédé et un dispositif de mesure qui fournissent la vitesse réelle du véhicule même quand les essieux sont affectés d'enrayage.

Suivant un premier aspect de l'invention, le procédé pour mesurer la vitesse d'un véhicule sur voie ferrée, consiste à mesurer la vitesse angulaire de chaque essieu, et à déterminer la plus grande de ces vitesses. Il est caractérisé en ce qu'on effectue les opérations suivantes:

a. on détermine au moins la décélération de l'essieu le plus rapide et l'on calcule la décélération moyenne des essieux;

b. on calcule la dérivée de la décélération de l'essieu le plus rapide et on la compare, en valeur absolue, à un seuil prédéterminé;

c. si cette dérivée est inférieure au seuil, on retient comme vitesse du véhicule la vitesse correspondant à la vitesse angulaire de l'essieu le plus rapide;

d. si cette dérivée est supérieure au seuil, on retient comme vitesse du véhicule la somme algébrique de la vitesse définie en c) et de l'intégrale de la décélération moyenne par rapport au temps.

Un essieu en cours d'enrayage est en décélération rapide et augmentant rapidement. Si l'essieu le plus rapide est lui-même dans ce cas, c'est que tous les essieux sont en enrayage. Par conséquent, la vitesse de rotation d'un essieu n'est plus significative de la vitesse du véhicule. L'intégrale de la décélération $\gamma$ est $\gamma t$ et l'addition algébrique de cette quantité à la vitesse mesurée de rotation de l'essieu donne une valeur pratiquement exacte de la vitesse du véhicule.

Suivant une première forme de réalisation du procédé, pour déterminer la décélération de l'essieu le plus rapide, on dérive la vitesse de l'essieu le plus rapide, et, pour calculer la décélération moyenne, on dérive la moyenne des vitesses.

Suivant une seconde forme, on mesure les décélérations de tous les essieux pour calculer directement la décélération moyenne, et on dérive chaque décélération pour comparer séparément chaque dérivée à un seuil prédéterminé en vue de choisir l'opération c) précitée si au moins l'une de ces dérivées est inférieure au seuil, et l'opération d) dans le cas contraire.

C'est en effet seulement si les quatre dérivées dépassent le seuil que tous les essieux sont enrayés.

Cette seconde forme du procédé est plus exacte que la précédente mais nécessite un montage plus complexe.

D'après un résultat d'expérience on a choisi le seuil de comparaison des dérivées de décélération égal à environ 2,5 m/s$^3$.

Toujours d'après l'expérience, le choix de l'opération c) après d) n'est effectué qu'après suppression du dépassement de seuil par toutes les dérivées pendant une durée prédéterminée, qui est d'environ 0,5 s.

Suivant un second aspect de l'invention, le dispositif pour mesurer la vitesse d'un véhicule sur voie ferrée, et notamment pour appliquer un procédé tel que celui décrit plus haut, comprend, sur chaque essieu, un détecteur de la vitesse angulaire dudit essieu, et un étage de comparaison déterminant la plus grande de ces vitesses et relié à une borne de sortie du dispositif. Il est caractérisé en ce qu'il comprend:

a. un étage de calcul de la décélération moyenne des essieux;

b. un étage de dérivation d'au moins la décélération de l'essieu le plus rapide;

c. un étage de comparaison de cette dérivée avec un seuil prédéterminé;

d. un intégrateur de la décélération moyenne relié en sortie à une entrée d'un additionneur dont une autre entrée est reliée en dérivation à la sortie de l'étage de comparaison de vitesse et dont la sortie est reliée à la borne de sortie de l'appareil;

e. une liaison entre la sortie de l'étage de comparaison de la dérivée de décélération moyenne et un interrupteur placé sur un court-circuit de l'intégrateur;

f. une porte OU recevant le signal de vitesse maximale et le signal de sortie de l'additionneur et reliée à la borne de sortie de l'appareil;

g. un interrupteur situé sur la ligne reliant l'étage de comparaison de vitesse à l'additionneur, cet interrupteur étant relié à la sortie de l'étage de comparaison de la dérivée de décélération, un étage de mémoire étant relié en dérivation entre cet interrupteur et l'additionneur.

D'autres particularités et avantages de l'invention
ressortiront encore de la description détaillée qui va suivre.

Aux dessins annexés, donnés à titre d'exemples non
limitatifs:

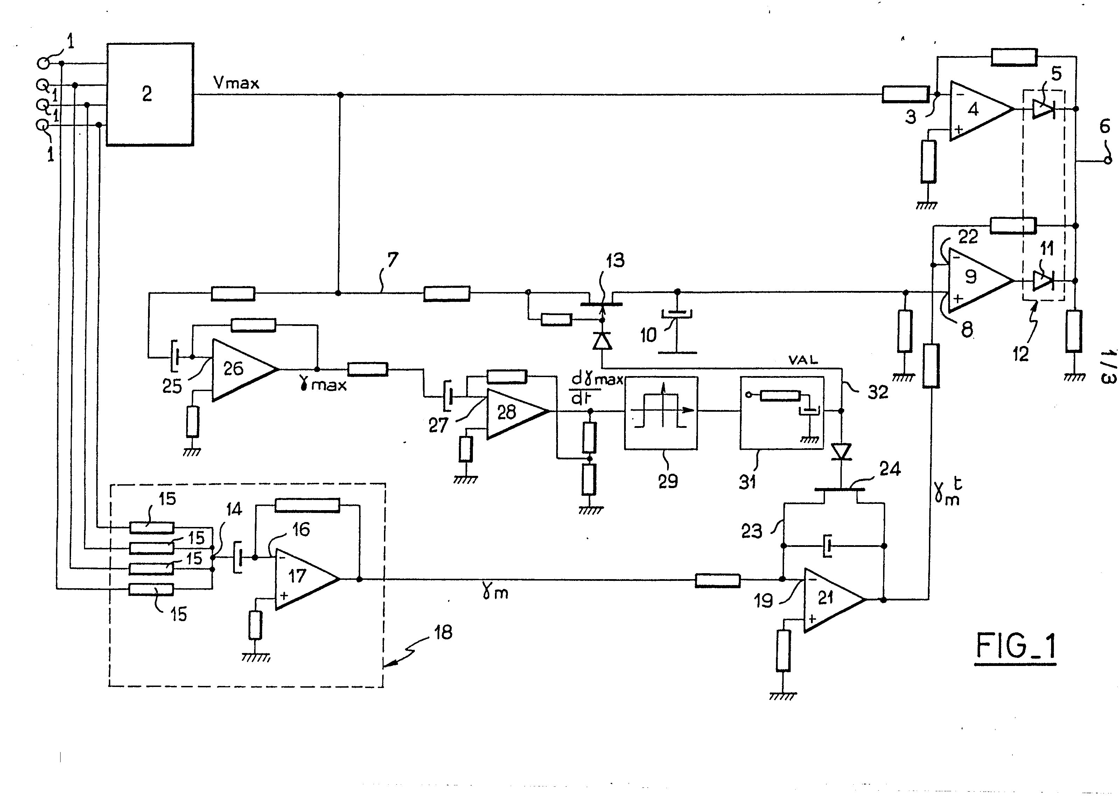

. la figure 1 est un schéma électrique d'une première forme de réalisation de l'invention;

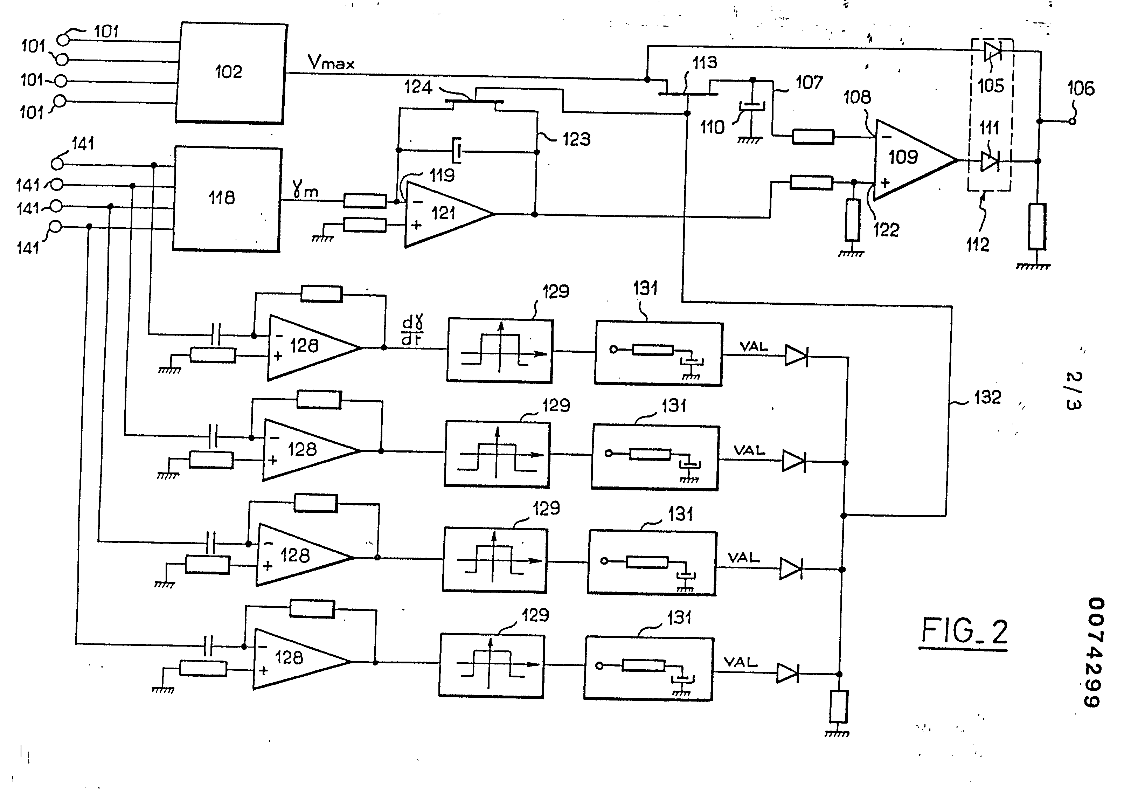

. la figure 2 est un schéma électrique d'une
seconde forme de réalisation de l'invention;

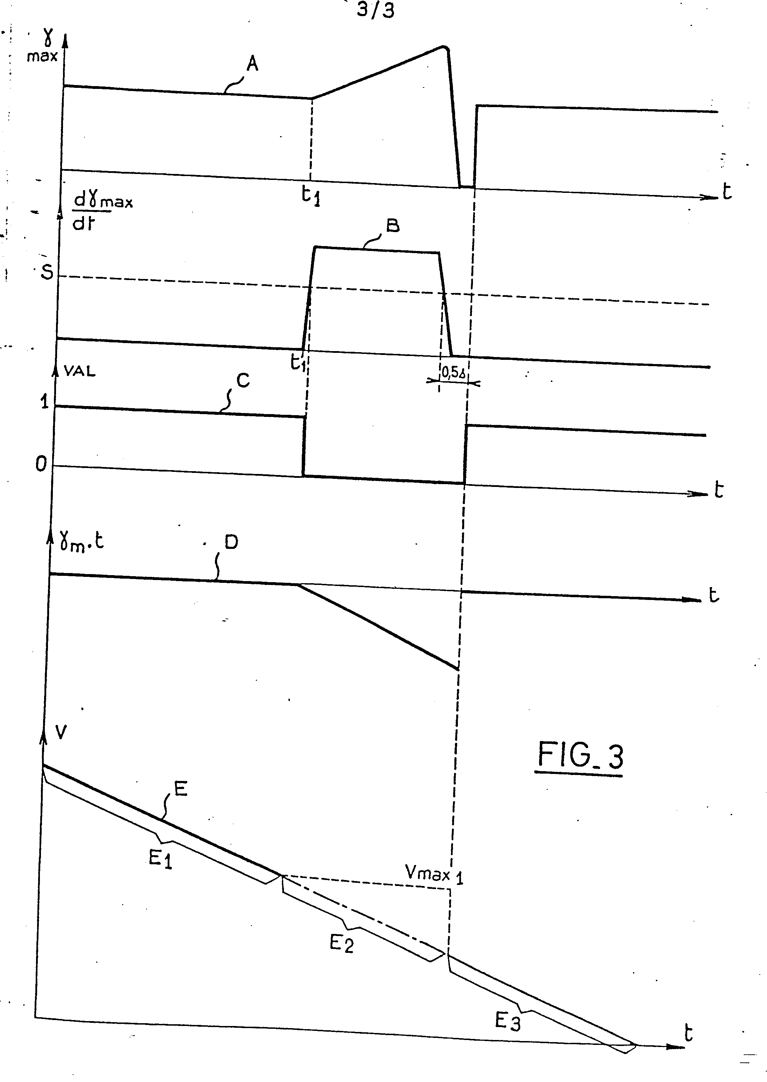

. la figure 3 est un diagramme temporel destiné
à expliquer le fonctionnement du dispositif;

En référence à la figure 1, le dispositif conforme
à l'invention comprend, dans une première forme de réalisation, quatre détecteurs de vitesse 1 montés respectivement
sur quatre essieux d'un véhicule ferroviaire. Ces détecteurs
sont d'un type classique délivrant des impulsions de fréquence proportionnelle à la vitesse de rotation des essieux
et ils sont reliés à un étage de comparaison 2 qui détermine
de façon connue la plus grande des quatre vitesses angulaires et délivre un signal $V_{max}$ représentatif de cette
vitesse. Dans ce qui suit, on considèrera comme équivalents
les signaux de vitesse angulaire des essieux et de vitesse
linéaire du véhicule, la conversion résultant d'une multiplication par un coefficient constant. Il en sera de même
des décélérations.

Le signal $V_{max}$ est appliqué à une entrée 3 d'un
amplificateur opérationnel 4 dont la sortie est reliée, par
l'intermédiaire d'une diode 5, à une borne de sortie 6 de
l'appareil.

Le signal $V_{max}$ est appliqué en dérivation par
une ligne 7 vers une entrée 8 d'un additionneur 9 dont la
sortie est reliée à la borne de sortie 6 par l'intermédiaire d'une diode 11, l'ensemble des diodes 5 et 11 constituant une porte OU classique 12 laissant passer le plus grand des signaux qui lui sont appliqués à travers les diodes respectives.

La ligne 7 comporte, en série, le circuit drain-source d'un transistor 13 à effet de champ formant interrupteur, dont la grille est commandée par un étage qui sera décrit plus loin.

Enfin, un condensateur 10 polarisé négativement est branché en dérivation sur la ligne 7, entre l'interrupteur 13 et l'additionneur 9, pour servir d'étage de mémoire.

Les détecteurs de vitesse 1 sont reliés en dérivation à un point commun 14 par l'intermédiaire de quatre résistances identiques 15, de sorte que le signal recueilli en 14 représente la vitesse moyenne $V_m$ des essieux. Le signal $V_m$ est appliqué à l'entrée 16 d'un dérivateur 17 qui délivre en sortie un signal $\gamma m$ considéré comme la décélération moyenne des essieux. L'ensemble des résistances 15 et du dérivateur 17 constituent ainsi un étage 18 de calcul de la décélération moyenne $\gamma m$, dont la sortie est appliquée à une entrée 19 d'un intégrateur 21. La sortie de cet intégrateur est reliée à l'autre entrée 22 de l'additionneur 9.

L'intégrateur 21 est muni d'une ligne de court-circuit 23 qui le rend inopérant quand elle est fermée. Cette ligne comporte un interrupteur 24 constitué par un transistor à effet de champ dont la grille est attaquée en parallèle avec celle du transistor 13.

Le signal $V_{max}$ est encore appliqué à l'entrée 25 d'un dérivateur 26 qui fournit en sortie un signal $\gamma max$ représentant la décélération de l'essieu le plus rapide. Ce signal est appliqué à l'entrée 27 d'un autre dérivateur 28 qui délivre en sortie la dérivée $\frac{d\gamma max}{dt}$ de cette décélération.

Ce signal est appliqué à un étage 29 de comparaison avec un seuil prédéterminé S dont la valeur, dans l'exemple décrit, correspond à une valeur de 2,5 m/s$^3$. Cet étage délivre un signal de validation VAL qui vaut "zéro" quand le seuil est dépassé, et qui vaut "un" dans le cas contraire. Ce signal "VAL" est appliqué, par l'intermédiaire d'un étage de temporisation 31 de 0,5 s, à une ligne 32 reliée aux grilles des transistors 13 et 24. Toutefois, seul le passage de "zéro" à "un" est affecté par cette temporisation, qui correspond à un désenrayage effectif.

On va maintenant expliquer le fonctionnement du dispositif décrit, en référence à la figure 3.

Un véhicule ferroviaire est en cours de freinage et l'on suppose que sa vitesse V décroît linéairement. Tant que tous les essieux ne sont pas enrayés, la vitesse $V_{max}$ de l'essieu le plus rapide est représentative de la vitesse du véhicule et c'est cette vitesse qui apparaît sur la borne de sortie 6. En effet, la décélération $\gamma$ est constante (courbe A) et sa dérivée est nulle (courbe B). Le seuil S n'est donc pas dépassé et le signal VAL vaut "un", ce qui maintient fermés les interrupteurs 13 et 24, ce qui, notamment, rend l'intégrateur inopérant puisqu'il est court-circuité. La vitesse prise en compte sur la sortie 6 est celle représentée sur la partie $t_1$ de la courbe E.

A cet instant $t_1$, tous les essieux (donc en particulier l'essieu le plus rapide) se trouvent enrayés et le signal $V_{max}$ n'a plus aucune signification. La décélération augmente rapidement (courbe A) et sa dérivée prend une valeur importante qui dépasse le seuil S pendant plus d'une demi-seconde (courbe B). Le signal VAL (courbe C) tombe à zéro ce qui ouvre les interrupteurs 13 et 24. L'intégrateur 21 fonctionne et délivre un signal $\gamma m.t$ (courbe D) qui vient s'ajouter, dans l'additionneur 9, à la valeur $V_{max\ 1}$ à l'instant $t_1$, valeur mise en mémoire dans le condensateur 10.

Par la porte OU 12, la valeur apparaissant sur la borne de sortie 6 est donc:

$$V_{max\ 1} + \gamma m.t$$

Cette valeur, représentée sur la partie $E_2$ de la courbe E représente assez fidèlement la vitesse réelle du véhicule, c'est-à-dire la dernière valeur connue comme significative à partir d'une vitesse d'essieu, corrigée de l'effet de décélération dû à l'enrayage (le terme $\gamma$m.t est négatif).

Après désenrayage, le signal VAL revient à 1 et l'amplificateur 4 transmet à nouveau la valeur $V_{max}$ à cet instant sur la sortie 6 (partie $E_3$ de la courbe E).

On va maintenant décrire, en référence à la figure 2, une seconde forme de réalisation de l'invention. Pour désigner les éléments analogues ou jouant le même rôle que dans la réalisation précédente, on utilisera les mêmes numéros de référence augmentés de 100.

Quatre détecteurs de vitesse 101 sont montés sur les essieux d'un véhicule ferroviaire et attaquent un étage de comparaison 102 qui délivre un signal $V_{max}$ représentatif de la vitesse du véhicule déduite de la vitesse de rotation de l'essieu le plus rapide. Ce signal est transmis sur une borne de sortie 106 par l'intermédiaire d'une diode 105.

Un circuit en dérivation 107 applique également ce signal à une entrée 108 d'un additionneur 109 dont la sortie est reliée à la borne 106 par l'intermédiaire d'une diode 111. L'ensemble des deux diodes 105 et 111 constitue une porte OU 112 qui laisse passer le plus grand des deux signaux qui lui est appliqué.

Sur la ligne 107 est intercalé un interrupteur 113 dont l'entrée de commande est reliée à un étage qui sera décrit plus loin. Un condensateur 110 formant étage de mémoire est branché en dérivation entre l'interrupteur et l'additionneur.

Quatre accéléromètres 141 sont montés sur les essieux respectifs et sont reliés à un additionneur 118 qui délivre en sortie un signal $\gamma$m égal à la moyenne des décélérations mesurées par les accéléromètres. Ce signal est appliqué à l'entrée 119 d'un intégrateur 121 dont la sortie est reliée à l'autre entrée 122 de l'additionneur 109. Un circuit 123, muni d'un interrupteur 124, court-circuite l'intégrateur pour le rendre inopérant.

Les signaux de décélération issus des accéléromètres sont appliqués respectivement à des dérivateurs 128 qui produiront chacun la dérivée de la décélération $\frac{d\gamma}{dt}$ de l'essieu correspondant, donc, en particulier, de l'essieu le plus rapide.

Ces signaux sont appliqués respectivement à des étages 129 de comparaison à un seuil prédéterminé S. Ces étages délivrent un signal VAL qui vaut "zéro" en cas de dépsssement du seuil et "un" dans le cas contraire. Dans l'exemple décrit, le signal S correspond à une dérivée de décélération de $2,5 \text{ ms}^3$. Chaque signal VAL passe par un étage de temporisation 131 de manière à n'être transmis qu'après une persistance de 0,5s au passage de "zéro" à "un".

Ces signaux VAL sont appliqués en parallèle, par une liaison 132, aux entrées de commande des interrupteurs 113 et 124.

Le fonctionnement de ce dispositif est tout à fait analogue à celui du dispositif décrit précédemment. Quand les quatre signaux VAL tombent à zéro (donc en particulier celui correspondant à l'essieu le plus rapide), les quatre essieux sont enrayés et le signal $V_{max}$ perd toute signification. Les interrupteurs 113 et 124 s'ouvrent. L'intégrateur fonctionne et la quantité $\gamma m.t$ vient s'ajouter algébriquement à la dernière valeur significative connue $V_{max1}$ de $V_{max}$.

La différence tient au fait que la décélération moyenne $\gamma m$ est calculée plus rigoureusement comme la moyenne des décélérations et non comme la dérivée de la vitesse moyenne. De même, les décélérations (en particulier la décélération de l'essieu le plus rapide) sont mesurées directement, et non calculées comme dérivées de la vitesse

(en particulier de $V_{max}$ ). En contre-partie de ces avantages, le montage est un peu plus complexe.

Bien entendu, l'invention n'est pas limitée à l'exemple décrit mais couvre toute variante à la portée de l'homme de l'art.

REVENDICATIONS

1. Procédé pour mesurer la vitesse d'un véhicule sur voie ferrée, dans lequel on mesure la vitesse angulaire de chaque essieu, et dans lequel on détermine la plus grande ($V_{max}$) de ces vitesses, caractérisé en ce qu'on effectue les opérations suivantes:

a. on détermine au moins la décélération ($\gamma_{max}$) de l'essieu le plus rapide et l'on calcule la décélération moyenne ($\gamma m$) des essieux;

b. on calcule la dérivée ($\frac{d\gamma_{max}}{dt}$ de la décélération de l'essieu le plus rapide et on la compare à un seuil (S) prédéterminé;

c. si cette dérivée est inférieure au seuil, on retient comme vitesse du véhicule la vitesse ($V_{max}$) correspondant à la vitesse angulaire de l'essieu le plus rapide;

d. si cette dérivée est supérieure au seuil, on retient comme vitesse du véhicule la somme algébrique de la vitesse ($V_{max}$) définie en c) et de l'intégrale ($\gamma m.t$) de la décélération moyenne par rapport au temps.

2. Procédé conforme à la revendication 1, caractérisé en ce que, pour déterminer la décélération ($\gamma_{max}$) de l'essieu le plus rapide, on dérive la vitesse ($V_{max}$) de l'essieu le plus rapide, et en ce que, pour calculer la décélération moyenne ($\gamma m$), on dérive la moyenne (Vm) des vitesses.

3. Procédé conforme à la revendication 1, caractérisé en ce qu'on mesure les décélérations de tous les essieux pour calculer directement la décélération moyenne ($\gamma m$), et en ce qu'on dérive chaque décélération pour comparer séparément chaque dérivée à un seuil (S) prédéterminé en vue de choisir l'opération c) précitée si au moins l'une de ces dérivées est inférieure au seuil, et l'opération d) dans le cas contraire.

4. Procédé conforme à l'une des revendications

**0074299**

1 à 3, caractérisé en ce que le seuil (S) de comparaison des dérivées de décélération est d'environ 2,5 m/s$^3$.

5. Procédé conforme à l'une des revendications 1 à 4, caractérisé en ce que le choix de l'opération c) après d) est effectué après suppression du dépassement de seuil par toutes les dérivées pendant une durée prédéterminée.

6. Procédé conforme à la revendication 5, caractérisé en ce que la durée de suppression du dépassement de seuil est d'environ 0,5 s.

7. Dispositif pour mesurer la vitesse d'un véhicule sur voie ferrée, et notamment pour appliquer un procédé conforme à la revendication 1, comprenant, sur chaque essieu, un détecteur (1,101) de la vitesse angulaire dudit essieu, et un étage de comparaison (2,102) déterminant la plus grande ($V_{max}$) de ces vitesses et relié à une borne de sortie (6,106) du dispositif, caractérisé en ce qu'il comprend:

a. un étage (18,118) de calcul de la décélération moyenne ($\gamma$ m) des essieux;

b. un étage (28,128) de dérivation d'au moins la décélération ($\gamma_{max}$) de l'essieu le plus rapide;

c. un étage (29,129) de comparaison de cette dérivée avec un seuil prédéterminé (S);

d. un intégrateur (21,121) de la décélération moyenne ($\gamma$ m) relié en sortie à une entrée (22,122) d'un additionneur (9,109) dont une autre entrée (8,108) est reliée en dérivation à la sortie de l'étage (2,102) de comparaison de vitesse et dont la sortie est reliée à la borne de sortie (6,106) de l'appareil;

e. une liaison (32,132) entre la sortie de l'étage (29,129) de comparaison de la dérivée de décélération moyenne ($\gamma$ m) et un interrupteur (24,124) placé sur court-circuit (23,123) de l'intégrateur (21,121);

f. une porte OU (12,112) recevant le signal de vitesse maximale ($V_{max}$) et le signal de sortie de l'additionneur (9,109) et reliée à la borne de sortie (6,106) de l'appareil;

g. un interrupteur (13,113) situé sur la ligne (7,107) reliant l'étage (2,102) de comparaison de vitesse à l'additionneur (9,109), cet interrupteur étant relié à la sortie de l'étage (29,129) de comparaison de la dérivée de décélération, un étage de mémoire (10,110) étant relié en dérivation entre cet interrupteur et l'additionneur.

8. Dispositif conforme à la revendication 7, caractérisé en ce qu'il comprend un étage de temporisation (31,131) en sortie de l'étage (29,129) de comparaison de la dérivée de décélération.

9. Dispositif conforme à l'une des revendications 7 ou 8, caractérisé en ce que l'étage (18) de calcul de la décélération moyenne comprend un étage (15) de calcul de la vitesse moyenne ($V_m$) des essieux relié en sortie à un dérivateur (17).

10. Dispositif conforme à la revendication 9, caractérisé en ce que l'étage de dérivation de la décélération ($\gamma_{max}$) d'au moins l'essieu le plus rapide comprend un dérivateur (28) dont l'entrée est reliée à la sortie d'un autre dérivateur (26) recevant le signal de vitesse maximale ($V_{max}$).

11. Dispositif conforme à l'une des revendications 7 ou 8, caractérisé en ce que l'étage de calcul de la décélération moyenne ($\gamma_m$) comprend un additionneur (118) dont les entrées sont reliées à des capteurs de décélération (141) disposés sur chaque essieu.

12. Dispositif conforme à la revendication 11, caractérisé en ce que l'étage de calcul d'au moins la décélération de l'essieu le plus rapide comprend autant de dérivateurs (128) que d'essieux, reliés respectivement par leur entrée aux capteurs de décélération (141) et par leur sortie à des comparateurs à seuil (129) respectifs.

FIG_1

FIG_2

2/3

0074299

$\underline{\text{FIG. 3}}$

Office européen
des brevets

**RAPPORT DE RECHERCHE EUROPEENNE**

**0074299**
Numéro de la demande

EP 82 40 1549

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | DE-A-2 102 294 (FORD) *Page 1, ligne 17 - page 2, ligne 18; figure 1* | 1,7 | G 01 P 7/00 B 60 T 8/00 |
| A | DE-B-2 813 078 (SEL) *Colonne 3, ligne 66 - colonne 4, ligne 8; figures* | 1,7,10 | |
| A | DE-A-2 010 518 (KELSEY-HAYES COMP.) *Page 4, ligne 8 - page 6, ligne 13; figure 3* | 1,7 | |
| A | US-A-4 193 642 (MILLER) *Colonne 2, lignes 16-36; colonne 3, lignes 14-41; figure 1* | 1,2,7, 10 | DOMAINES TECHNIQUES RECHERCHES (Int. Cl. ³) |
| A | US-A-3 677 094 (KÜPFMÜLLER) *Colonne 4, lignes 14-28; figure 2* | 1,7 | G 01 P B 60 T |
| A | FR-A-2 415 029 (HONDA) *Page 3, lignes 6-35; figures 2,4a,4b* | 1,7 | |

-----

Le présent rapport de recherche a été établi pour toutes les revendications

| Lieu de la recherche LA HAYE | Date d'achèvement de la recherche 14-12-1982 | Examinateur HANSEN P. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82